# EUROPÄISCHE PATENTANMELDUNG

(11) **EP 3 431 850 A1**
(43) Veröffentlichungstag der Anmeldung: **23.01.2019**
(21) Anmeldenummer: 18184539.7
(22) Anmeldetag: 19.07.2018
(51) Int. Cl.: F16K 37/00, F16K 5/06, F16K 31/04

(54) **KUGELHAHN**

(30) Priorität: 19.07.2017 DE 202017104287 U
(71) Anmelder: Lilie GmbH & Co. KG, 74354 Besigheim (DE)
(72) Erfinder: RÖSEMANN, Peter, 71711 Steinheim (DE)
(74) Vertreter: Tergau & Walkenhorst Patentanwälte PartGmbB

(57) **Zusammenfassung**

Kugelhahn mit einem Gehäuse (1) und mit einer von einem Durchleitungskanal (7) durchsetzten, im Gehäuse (1) gelagerten und von einem Elektromotor drehangetriebenen Sperrkugel (2) wobei der Elektromotor abschaltet, sobald die Sperrkugel (2) entweder ihre vollständige Öffnungsstellung oder ihre vollständige Schließstellung erreicht hat, und wobei der Elektromotor die Sperrkugel (2) in ihre vollständige Öffnungsstellung zurückverfährt, wenn die Sperrkugel (2) bei der Schließbewegung nicht in ihre vollständige Schließstellung verfährt.

## Beschreibung

Die Erfindung betrifft einen Kugelhahn. Derartige Kugelhähne bestehen aus einem Gehäuse und einer im Gehäuse drehbar gelagerten Sperrkugel. Die Sperrkugel ist von einem in Richtung der Mittellängsachse der Kugel verlaufenden Durchleitungskanal durchsetzt. Der Durchleitungskanal dient zur Durchleitung eines Fluids. Das Gehäuse weist an zwei einander gegenüberliegenden Enden jeweils einen mit dem Durchleitungskanal in der Öffnungsstellung des Kugelhahns fluchtenden Durchströmkanal auf. Ist der Kugelhahn geöffnet, bilden der zentrale Durchleitungskanal in der Sperrkugel und die beiden randseitig sich an den Durchleitungskanal anschließenden Durchströmkanäle eine Durchleitung für das durchzuleitende Fluid. Zum Schließen des Kugelhahns wird die Sperrkugel einfach um ihre Längsachse verdreht, so dass der Durchleitungskanal mit den Durchströmkanälen nicht mehr fluchtet, sondern die Durchstromkanäle von angrenzenden Bereichen des Außenmantels der Sperrkugel randseitig verschlossen sind.

Zur Erleichterung der Bedienung ist der Kugelhahn elektromotorisch angetrieben. Das Motordrehmoment wird dabei in der Regel mit Hilfe eines Zahnradgetriebes auf die Sperrkugel übertragen. Verfängt sich beim Schließen der Sperrkugel ein Hindernis im Durchleitungskanal, kann die Sperrkugel nicht vollständig in ihre Schließstellung verdreht werden. Das Hindernis wird dann nämlich zwischen dem Rand des Durchleitungskanals der Sperrkugel, nämlich im Bereich der Kante der Durchleitungskanalöffnung und dem Durchströmkanal des Kugelhahns eingeklemmt. Dies führt dazu, dass der Elektromotor mit seiner vollständigen Leistung versucht, die Sperrkugel in ihre Schließstellung zu verfahren, was schlussendlich zu einem Durchbrennen und damit zu einem Ausfall des Elektromotors führen kann.

Ausgehend hiervon liegt der Erfindung die Aufgabe zugrunde, einen Kugelhahn so zu gestalten, dass ein Ausfall des Elektromotors wirksam verhindert ist.

Die erfindungsmäßige Überlastsicherung ist so ausgestaltet, dass der Elektromotor die Sperrkugel in ihre Öffnungsstellung zurück verfährt und abschaltet, sobald eine gewisse Motorleistung überschritten wird, ohne dass die Sperrkugel in ihre Schließstellung verfährt. Die Überlastsicherung sieht vor, dass beim Überschreiten einer gewissen Motorleistung des Elektromotors die Sperrkugel vom Elektromotor in ihre Öffnungsstellung zurück verfahren wird, um anschließend einen weiteren Schließvorgang der Sperrkugel einzuleiten. Auf diese Weise ist es möglich, dass ein kleines Hindernis den Durchleitungskanal verlassen kann, so dass das Hindernis das vollständige Verschließen der Sperrkugel nicht mehr verhindert.

Befindet sich das Hindernis weiterhin im Bereich des Durchleitungskanals der Sperrkugel, wird das unvollständige Schließen der Sperrkugel und das anschließende Verfahren der Sperrkugel in ihre Öffnungsstellung wiederholt, in bevorzugter Ausgestaltung bis zu drei Mal. Ist nach dem letzten, vorzugsweise dritten Schließversuch der Sperrkugel ein Verschließen immer noch nicht möglich, schaltet der Elektromotor als Schutz vor Überlastung ab.

Anhand des in den Zeichnungsfiguren dargestellten Ausführungsbeispiels ist die Erfindung mit weiteren Einzelheiten erläutert. Es zeigen:
- Fig. 1: eine Seitenansicht des erfindungsmäßigen Kugelhahnes,
- Fig. 2: die Vorderansicht des erfindungsmäßigen Kugelhahnes gemäß dem Sichtpfeil II in Fig. 1,
- Fig. 3: das Detail III, nämlich die im Gehäuse angeordnete Sperrkugel mit teilweise geöffnetem Durchleitungskanal.

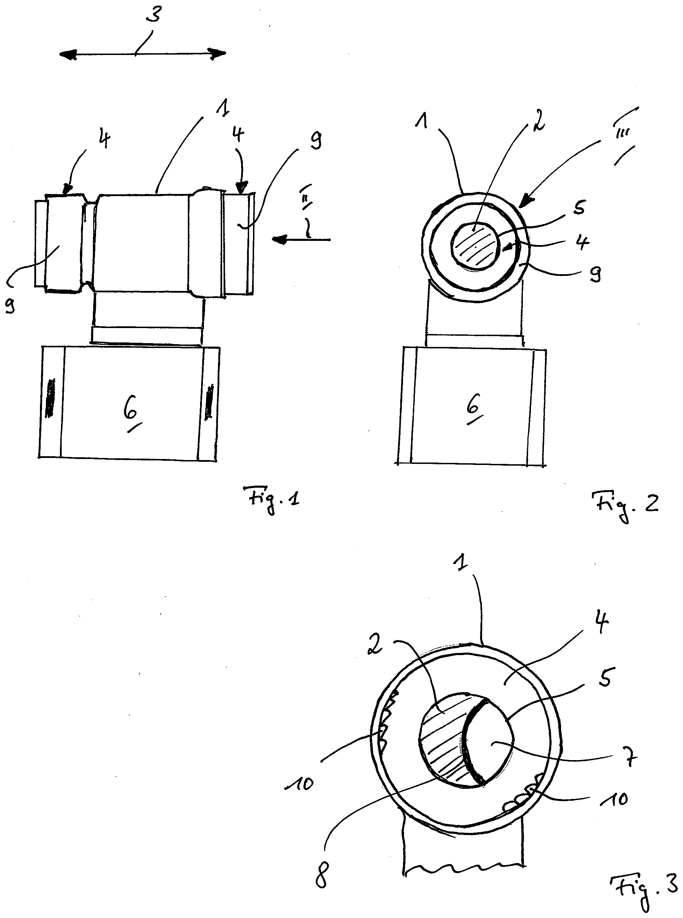

Der Kugelhahn besteht aus einem Gehäuse 1 und einer im Gehäuse 1 drehbar gelagerten Sperrkugel 2. In Gehäuselängsrichtung 3 schließt sich an die etwa mittig im Gehäuse 1 sitzende Sperrkugel 2 jeweils ein Durchströmkanal 4 des Gehäuses 1 an. In Fig. 2 blickt man in einen der Durchströmkanäle 4 auf die Sperrkugel 2. Dabei ist eine Teflondichtung 5 an dem der Sperrkugel 2 zugewandten Ende des Durchströmkanals 4 sichtbar.

In der Darstellung der Fig. 2 ist die Sperrkugel 2 verschlossen.

Unten am Gehäuse 1 des Kugelhahns ist ein Motorgehäuse 6 angeflanscht. Das Motorgehäuse 6 nimmt einen Antriebsmotor, vorzugsweise einen elektrisch angetriebenen Antriebsmotor auf. Der Antriebsmotor dient zum Drehantrieb der Sperrkugel 2 im Gehäuse 1 des Kugelhahns. Die Fig. 2 zeigt die Sperrkugel 2 im verschlossenen Zustand. Zum Öffnen der Sperrkugel 2 gibt die Sperrkugel 2 ihren Durchleitungskanal 7 frei. In Fig. 3 ist der teilweise geöffnete Durchleitungskanal 7 erkennbar. Die Fig. 3 zeigt die Sperrkugel 2 deshalb in etwa halb geöffneter Öffnungsstellung. In der Darstellung der Fig. 3 ist wiederum die Teflondichtung 5 im Durchströmkanal 4 erkennbar. Außerdem ist die abgerundete Kante 8 der Durchleitungskanalöffnung des Durchleitungskanals 7 sichtbar.

Schließlich ist erkennbar, dass die Kanalenden des Durchströmkanals 4 jeweils als Stutzen 9 ausgestaltet sind. Die Stutzen 9 tragen an ihrer Innenseite Befestigungselemente 10. Als Befestigungselemente 10 sind Gewinde, Elemente eines Bajonettverschlusses oder ein O-Ring einer Rohrsteckverbindung denkbar.

Die Funktionsweise des erfindungsmäßigen Kugelhahns ist folgende:
Im verschlossenen Zustand, welcher in Fig. 2 dargestellt ist, versperrt die Sperrkugel 2 den Durchströmkanal 4 vollständig. Wird die Sperrkugel 2, wie in Fig. 3 dargestellt, geöffnet, dreht der die Sperrkugel 2 durchsetzende Durchleitungskanal 7 so lange in den Durchströmkanal 4 des Gehäuses 1 hinein, bis der Durchströmkanal 4 und der Durchleitungskanal 7 vollständig miteinander fluchten. Auf diese Weise ist dann eine durch das Gehäuse 1 des Kugelhahns durchgängige Durchströmleitung geschaffen.

Die Überlastsicherung sieht vor, dass beim Überschreiten einer gewissen Motorleistung des Elektromotors die Sperrkugel (2) in ihre Öffnungsstellung vom Elektromotor zurück verfahren wird. Anschließend wird ein weiterer Schließvorgang der Sperrkugel (2) eingeleitet. Auf diese Weise ist es möglich, dass kleine Hindernisse den Durchleitungskanal (7) verlassen können, so dass sie das vollständige Verschließen der Sperrkugel (2) nicht mehr verhindern.

Befindet sich weiterhin ein Hindernis im Bereich des Durchleitungskanals (7) der Sperrkugel (2), wird das unvollständige Schließen der Sperrkugel (2) und die anschließende Rückdrehung der Sperrkugel (2) in ihre Öffnungsstellung bis zu drei Mal wiederholt. Ist nach dem dritten Schließversuch der Sperrkugel (2) ein Verschließen immer noch nicht möglich, schaltet der Elektromotor als Schutz vor Überlastung ab.

### Bezugszeichenliste

- 1: Gehäuse
- 2: Sperrkugel
- 3: Gehäuselängsrichtung
- 4: Durchströmkanal
- 5: Teflondichtung
- 6: Motorgehäuse
- 7: Durchleitungskanal
- 8: abgerundete Kante der Durchleitungskanalöffnung
- 9: Stutzen
- 10: Befestigungselement

- II: Sichtpfeil
- III: Detail

## Patentansprüche

1. Kugelhahn mit einem Gehäuse (1) und mit einer von einem Durchleitungskanal (7) durchsetzten, im Gehäuse (1) gelagerten und von einem Elektromotor drehangetriebenen Sperrkugel (2)
**dadurch gekennzeichnet**
**dass** der Elektromotor abschaltet, sobald die Sperrkugel (2) entweder ihre vollständige Öffnungsstellung oder ihre vollständige Schließstellung erreicht hat, und
**dass** der Elektromotor die Sperrkugel (2) in ihre vollständige Öffnungsstellung zurückverfährt, wenn die Sperrkugel (2) bei der Schließbewegung nicht in ihre vollständige Schließstellung verfährt.

2. Kugelhahn nach Anspruch 1
**dadurch gekennzeichnet**
**dass** der Elektromotor die Sperrkugel (2) aus ihrer vollständigen Öffnungsstellung bis zu drei Mal in ihre vollständige Öffnungsstellung zurückverfährt und anschließend abschaltet, wenn die Sperrkugel (2) bei der Schließbewegung ihre vollständige Schließstellung jeweils nicht erreicht.
